# EUROPÄISCHE PATENTANMELDUNG

(11) **EP 1 388 359 A1**
(43) Veröffentlichungstag der Anmeldung: **11.02.2004**
(21) Anmeldenummer: 03017329.8
(22) Anmeldetag: 31.07.2003
(51) Int. Cl.: B01D 21/24, B01D 17/02

(54) **Kombinierte Klarwasser-Schwimmschlammabzugsvorrichtung**

(30) Priorität: 31.07.2002 DE 10235917
(71) Anmelder: HST-WKS Hydro-Systemtechnik GmbH, 01217 Dresden (DE)
(72) Erfinder: Göbel, Falk, 01257 Dresden (DE); Augustin, Jürgen, 01844 Neustadt (DE); Räuber, Petra, 01324 Dresden (DE)
(74) Vertreter: Heyner, Klaus, Dr.-Ing.

(57) **Zusammenfassung**

Eine kombinierte Klarwasser-Schwimmschlammabzugsvorrichtung, die einen Klarwasserabzug mit den Komponenten Zentraleinheit (7,8), Schwimmereinheit (9), Dekanterablauf (4) und Steuerungsbaustein mit dem Schwimmschlammabzug und den zugehörigen Komponenten Skimrinne (1) mit Ablaufkasten (2), Ablaufschlauch (3), Rahmen (5) und Regelantrieb (6) funktionell verbindet und für SBR-Verfahren mit wechselndem Flüssigkeitsstand vorteilhaft geeignet ist.

## Beschreibung

Die Schwimmschlammabzugsvorrichtung dient der Abtrennung von eventuell auftretendem Flotatschlamm unter Nutzung der Strömungsverhältnisse im Sequencing-Batch-Reaktor (SBR) bei Betrieb der Umwälzvorrichtung.

Der Schwimmschlammabzug erfolgt insbesondere während der BioP- und Denitrifikationsphasen.

Im Stand der Technik sind Vorrichtungen zum Räumen von Schwimmschlamm in Abwasser-Klärbecken, beispielsweise aus der DE 40 23 557 und der DE 41 29 748, bekannt. Dabei wird der Schlamm durch mechanische Vorrichtungen zu einer Rinne gefördert und nach Betätigung einer Einlaufklappe ungeregelt entfernt.

Weiterhin ist aus der DE 199 59 820 eine Vorrichtung zum Austragen von schwimmfähigem und verwirbelbarem Trägermaterial für Mikroorganismen in biologischen Reinigungsanlagen bekannt.

Dem Stand der Technik haftet der Nachteil an, dass die Realisierung des Schwimmschlammabzuges von anderen Aufgaben losgelöst durch eigens für diese spezielle Aufgabe entwickelte und mechanisch anfällige Vorrichtungen erbracht wird. Weiterhin sind die genannten Vorrichtungen ungeeignet, den sich wechselnden Flüssigkeitsständen eines SBR-Verfahrens anzupassen. Außerdem ist die Kombination von Klarwasserabzug und Schwimmschlammabzug mit derartigen Vorrichtungen nach dem Stand der Technik nicht möglich.

Der Erfindung liegt somit die Aufgabe zugrunde, eine Vorrichtung derart auszubilden, dass eine Kombination von Klarwasserabzug und Schwimmschlammabzug mit einer kombinierten Vorrichtung realisiert werden kann.

An die kombinierte Schwimmschlammabzugsvorrichtung werden folgende allgemeine Anforderungen gestellt:
- automatische Anpassung an den steigenden und sinkenden Wasserspiegel in Verbindung mit unterschiedlichen Lastfällen für den Klarwasserabzug,
- unsinkbare Ausführung der Vorrichtung,
- pulsierender Betrieb in der Weise, dass ein Aufstau des Schwimmschlammes vor der Tauchwand erfolgt und dass durch pulsierendes Absenken der Tauchwand der Schwimmschlamm in die Abzugsvorrichtung gelangt; als Transportmedium wird dazu die Wasserströmung für den i.a. nur schwer fließfähigen Flotatschlamm ausgenutzt und
- volle Funktionsfähigkeit bei allen Auftriebsverhältnissen.

Erfindungsgemäß wird die Aufgabe gelöst durch eine kombinierte Klarwasser-Schwimmschlammabzugsvorrichtung, aufweisend:
A einen Klarwasserabzug mit
   a) einer Zentraleinheit, aufweisend:
      - einen Dekanterkelch (7),
      - eine Schlammsperre (8) und
      - einen oberen Angularkompensator;
   b) einer Schwimmereinheit, aufweisend:
      - Pontons (9),
      - einen Regelantrieb,
      - einen Lineareinheit-Regelantrieb,
      - einen Rahmen und
      - einen Montageblock mit einem unteren Anschlag;
   c) einem Dekanterablauf, aufweisend:
      - ein Ablaufrohr (4) und
      - einen unteren Angularkompensator;
   d) einem Steuerungsbaustein zur Kopplung an die speicherprogrammierbare Steuerung der Kläranlage und
B einem Schwimmschlammabzug, aufweisend:
   e) eine schwenkbare Skimrinne (1) mit Ablaufkasten (2);
   f) einen Ablaufschlauch (3) mit Spiraleinlage;
   g) einen Rahmen (5) mit Parallelführung zur Aufnahme von Skimrinne (1) mit Ablaufkasten (2), der am Rahmen der Schwimmereinheit befestigt ist;
   h) einen Regelantrieb (6) für das Eintauchen der Skimrinne (1) zur Schlammaufnahme, wobei das zugehörige Regelsystem auch das Nachführen der Skimrinne (1) zum wechselnden Wasserstand realisiert.

Zur Gewährleistung der o.g. Parameter besteht die erfindungsgemäß mit dem Klarwasserabzug kombinierte Schwimmschlammabzugsvorrichtung aus folgenden Komponenten:
- schwenkbare Skimrinne mit Ablaufkasten,
- Ablaufschlauch mit Spiraleinlage,
- Rahmen mit Parallelführung zur Aufnahme von Skimrinne mit Ablaufkasten, der am Rahmen der Dekantiereinrichtung bzw. der Schwimmereinheit befestigt ist und
- Regelantrieb für das Eintauchen der Skimrinne zur Schlammaufnahme,
wobei das zugehörige Regelsystem auch das Nachführen der Skimrinne zum wechselnden Wasserstand ermöglichen soll.

Die erfindungsgemäße Weiterentwicklung des Klarwasserabzuges betrifft die folgenden Lösungsmerkmale:
- Die Vorrichtung dient der Klarwasserabtrennung während der Dekantierphase eines Sequencing-Batch-Reaktors.
- Das abgetrennte Klarwasser wird über ein Ablaufrohr der Ablaufleitung zugeführt.

Mit der Vorrichtung werden folgende Vorteile erreicht:
- automatische Anpassung des Klarwasserdekanters an den steigenden und sinkenden Wasserspiegel,
- unsinkbarer Schwimmer,
- flächiger/horizontaler Klarwassereintritt in den Dekanterbereich,
- Regelung der Ablaufmenge möglich,
- Verhinderung von Belebtschlammeintrag außerhalb der Dekantierphase und
- volle Funktionsfähigkeit der Dekantiereinrichtungen bei allen Auftriebsverhältnissen der Dekantiereinrichtung.

Zur Gewährleistung der vorgenannten Parameter besteht die Vorrichtung aus folgenden Komponenten:
- Zentraleinheit, bestehend aus:
   - Dekanterkelch mit Zackeneinlauf,
   - Schlammsperre und
   - oberer Angularkompensator;
- Schwimmereinheit, bestehend aus:
   - Ponton, Deckel verschraubt,
   - Füllmaterial aus Hartpolystyrol,
   - Regelantrieb,
   - Lineareinheit Regelantrieb,
   - Rahmen und
   - Montagebock mit einem unteren Anschlag;
- Dekanterablauf, bestehend aus:
   - Ablaufrohr und
   - unterer Angularkompensator;
- Steuerungsbaustein zur Kopplung an die speicherprogrammierbare Steuerung der Kläranlage.

Außerhalb der Dekantierphase befindet sich der Dekanterkelch oberhalb der Wasserspiegellage. Die oberhalb des oberen Angularkompensators mit dem Dekanterkelch verbundene Schlammsperre verhindert den Belebtschlammeintritt in den Bereich zwischen dem Einlaufkelch und der Innenkante der Schwimmkammern außerhalb der Dekantierphase.
Mit Beginn der Dekantierphase fährt der Regelantrieb den Dekanterkelch nach unten. Es strömt Klarwasser zwischen die Schlammsperre und die Schwimmerkammer ein und strömt über den Dekanterkelch in den Dekanterablauf.

Um das Ansprechverhalten der Regelung des Klarwasserdekanters zu erhöhen, ist die Wehrkante des Dekanterkelches nicht als gerade Wehrschwelle, sondern aus zwei Stück Dreieckswehren je Kante Dekanterkelch, konzipiert. Somit hat ein Absenken des Dekanterkelchs eine geringere Änderung der Ablaufmenge zur Folge als bei gerader Wehrschwelle.

Die wasserspiegelorientierte vertikale Lage des Klarwasserdekanters wird durch außen angebrachte, mit Hartpolystyrol gefüllte Pontons bzw. Schwimmerkammern gewährleistet. Damit wird der gesamte Klarwasserdekanter unsinkbar. Die Schwimmerkammern sind zur Auftriebsoptimierung vertikal mittels Spindeln einstellbar. Die Schwimmerkammern wirken gleichzeitig während der Dekantierphase als Tauchwand und verhindern somit den Schwimmschlammabtrieb.

Die Winkeldifferenz zwischen Einlaufkelch und Ablaufrohr bzw. zwischen Ablaufrohr und Mauerdurchführung, welche aus der wasserspiegelorientierten Höhenlage des Klarwasserdekanters resultiert, werden durch zwei Edelstahl-Angularkompensatoren gewährleistet.

Die horizontale Lagefixierung des Klarwasserdekanters erfolgt mit einer seitlichen Führungsstange. Zwei A-förmige Rohrböcke dienen gleichzeitig der Montage und als unterer Anschlag, der das Absenken des Klarwasserdekanters unterhalb des minimalen Wasserspiegels verhindert.

Eine am Einlaufkelch montierte Schlammsperre dichtet außerhalb der Dekantierphase den Einlaufkelch zur Tauchwand der Pontons bzw. Schwimmerkammern ab, so dass der Belebschlammeintritt verhindert wird. Mit Absenken des Einlaufkelches zu Beginn der Dekantierphase öffnet sich die Schlammsperre, es tritt Wasser in die Zentraleinheit des Klarwasserdekanters ein und strömt über den Einlaufkelch in das Ablaufrohr.

Durch die Ausführung der Schlammsperre und bedingt durch die geringen Einströmgeschwindigkeiten (< 0,2 m/s) in die Zentraleinheit des Klarwasserdekanters wird ein flächiger und strömungsberuhigter Klarwasserabzug gewährleistet.

Nach einer weiteren vorteilhaften Ausgestaltung der Erfindung sind Eintauchsonden an der kombinierten Klarwasser-Schwimmschlammabzugsvorrichtung vorgesehen, die Signale für die Regelung des Klarwasserabzuges und/oder des Schwimmschlammabzuges erzeugen. Der Klarwasserabzug wird der absinkenden Schlammschicht in der Sedimentationsphase dynamisch nachgeführt. Durch die Einbindung der Eintauchsonden und beispielsweise der Trübung als Regelgröße werden Sedimentier- und Dekantierphase zugunsten der Reaktionsphase optimal kurz gehalten. Sobald im Einströmbereich des Dekanters ein vorwählbarer Trübungswert unterschritten wird, wird die Sedimentierphase beendet, es beginnt die Dekantierphase. Während der Dekantierphase wird die Dekantiermenge auf einen vorwählbaren Trübungswert eingeregelt, der Klarwasserdekanter fährt damit der Trennzone Klarwasser/Belebtschlamm hinterher. Die Dekantiermenge kann somit auf einen Maximalwert beschränkt werden.

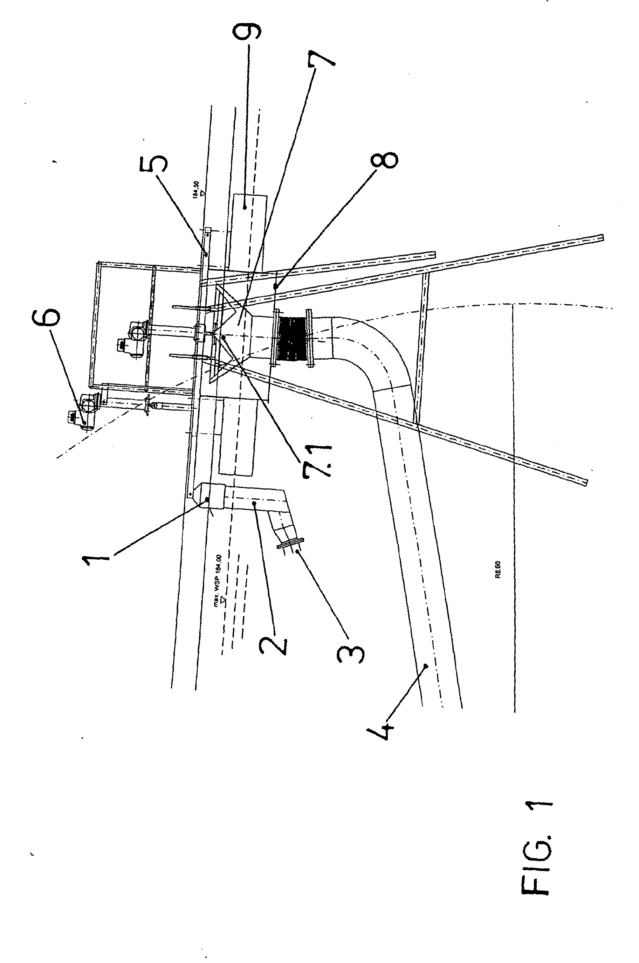

Fig. 1 zeigt die kombinierte Klarwasser-Schwimmschlammabzugsvorrichtung in der obersten Betriebslage.

Aufgrund der Wasserströmung gelangt der Schwimmschlamm in den Bereich der Abzugsvorrichtung und wird vor der Skimrinne 1 angestaut. Die Regelung der Schlammaufnahme erfolgt in der Form, dass der Regelantrieb 6 über ein Regelsystem betätigt wird, wodurch der Rahmen 5, an dem die Skimrinne 1 gelenkig gelagert ist, bewegt wird. Im Falle der Schlammaufnahme wird die Skimrinne 1 mit Hilfe des Rahmens 5 unter die Wasseroberfläche gedrückt. Die einstellbare Eintauchtiefe, die maximal 3 cm betragen kann, sichert die optimale Schlammaufnahme.

Der eintretende Schwimmschlamm fließt im freien Gefälle über den Ablaufkasten 2 und den Ablaufschlauch 3 in den Schwimmschlammpumpschacht.

Der pulsierende Betrieb der Abzugsvorrichtung wird dadurch gewährleistet, dass ein wechselndes Auf- und Eintauchen der Skimrinne 1 über den Regelantrieb 6 ausgelöst wird.

Fig. 1 zeigt weiterhin den Aufbau des Klarwasserabzuges mit den erfindungsgemäßen Merkmalen Dekanterkelch 7 mit gezackter Wehrkante 7.1, Schlammsperre 8 in geschlossener Position und Ponton 9 mit Füllmaterial aus Polystyrol.

### LISTE DER BEZUGSZEICHEN

- 1: schwenkbare Skimrinne
- 2: Ablaufkasten
- 3: Ablaufschlauch
- 4: Ablaufrohr
- 5: Rahmen
- 6: Regelantrieb
- 7: Dekanterkelch
7.1 Wehrkante, gezackt
- 8: Schlammsperre
- 9: Ponton mit Füllmaterial

## Patentansprüche

1. Kombinierte Klarwasser-Schwimmschlammabzugsvorrichtung, aufweisend:
A einen Klarwasserabzug mit
a) einer Zentraleinheit, aufweisend:
• einen Dekanterkelch (7),
• eine Schlammsperre (8) und
• einen oberen Angularkompensator;
b) einer Schwimmereinheit, aufweisend:
• Pontons (9),
• einen Regelantrieb,
• einen Lineareinheit-Regelantrieb,
• einen Rahmen und
• einen Montageblock mit einem unteren Anschlag;
c) einem Dekanterablauf, aufweisend:
• ein Ablaufrohr (4) und
• einen unteren Angularkompensator;
d) einem Steuerungsbaustein zur Kopplung an die speicherprogrammierbare Steuerung der Kläranlage und
B einem Schwimmschlammabzug, aufweisend:
e) eine schwenkbare Skimrinne (1) mit Ablaufkasten (2);
f) einen Ablaufschlauch (3) mit Spiraleinlage;
g) einen Rahmen (5) mit Parallelführung zur Aufnahme von Skimrinne (1) mit Ablaufkasten (2), der am Rahmen der Schwimmereinheit befestigt ist;
h) einen Regelantrieb (6) für das Eintauchen der Skimrinne (1) zur Schlammaufnahme, wobei das zugehörige Regelsystem auch das Nachführen der Skimrinne (1) zum wechselnden Wasserstand realisiert.

2. Klarwasser-Schwimmschlammabzugsvorrichtung nach Anspruch 1, **dadurch gekennzeichnet, dass** der Dekanterkelch (7) einen Zackeneinlauf (7.1) aufweist.

3. Klarwasser-Schwimmschlammabzugsvorrichtung nach Anspruch 1 oder 2, **dadurch gekennzeichnet, dass** die Pontons (9) Füllmaterial aus Hartpolystrol enthalten.

4. Klarwasser-Schwimmschlammabzugsvorrichtung nach einem der Ansprüche 1 bis 3, **dadurch gekennzeichnet, dass** Spindeln zur Einstellung der Lage der Pontons (9) in Bezug auf den Rahmen vorgesehen sind.

5. Klarwasser-Schwimmschlammabzugsvorrichtung nach einem der Ansprüche 1 bis 4, **dadurch gekennzeichnet, dass** der Dekanterkelch (7) eine Wehrkante (7.1) aufweist, welche nicht als gerade Wehrschwelle, sondern aus zwei Dreieckswehren je Kante, ausgebildet ist, wodurch ein Absenken des Dekanterkelches (7) eine geringere Änderung der Ablaufmenge zur Folge hat.

6. Klarwasser-Schwimmschlammabzugsvorrichtung nach einem der Ansprüche 1 bis 5, **dadurch gekennzeichnet, dass** die Skimrinne (1) gelenkig am Rahmen (5) gelagert ist.

7. Klarwasser-Schwimmschlammabzugsvorrichtung nach einem der Ansprüche 1 bis 6, **dadurch gekennzeichnet, dass** die maximal einstellbare Eintauchtiefe der Skimrinne (1) drei cm beträgt und somit die optimale Schlammaufnahme gewährleistet ist.

8. Klarwasser-Schwimmschlammabzugsvorrichtung nach einem der Ansprüche 1 bis 7, **dadurch gekennzeichnet, dass** Eintauchsonden vorgesehen sind, die Signale für die Regelung des Klarwasserabzuges und/oder des Schwimmschlammabzuges erzeugen.
